# EUROPEAN PATENT SPECIFICATION

(11) **EP 0 445 997 B1**
(45) Date of publication and mention of the grant of the patent: **13.07.1994**
(21) Application number: 91301760.4
(22) Date of filing: 04.03.1991
(51) Int. Cl.: B21D 26/08, B23K 20/08

(54) **Method of making composite structure for superplastic forming**
Verfahren zum Herstellen zusammengesetzter Strukturen für das "superplastische Formen"
Procédé pour fabriquer des structures composées pour le moulage superplastique

(30) Priority: 08.03.1990 GB 9005191
(43) Date of publication of application: 11.09.1991
(73) Proprietor: BRITISH AEROSPACE PUBLIC LIMITED COMPANY, Farnborough, Hants. GU14 6YU (GB)
(72) Inventor: Bottomley, Ian Edward, Preston, Lancashire, PR4 1AX (GB); Strickland, George, Preston, Lancashire, PR4 1AX (GB)
(74) Representative: Hedley, Nicholas James Matthew

(56) References cited:
- EP-A- 0 324 231
- EP-A- 0 350 329
- GB-A- 1 369 879

## Description

The present invention relates to superplastic forming and in particular to a method of making composite structure for superplastic forming according to the preamble of claim 1, as for example known from EP-A- 0 324 231.

### BACKGROUND ART

Superplastic forming is a well-established technique in which certain uniformly fine-grained metals, e.g. titanium and aluminium and their alloys, can be formed to a desired shape by heating and applying stress to the metal, e.g. by applying a pressure difference across a sheet made of the superplastic metal. The metal can stretch and thin out but will not neck or facture. It is well-known to use this technique to form, for example, panels for use in the aerospace industry by placing a composite structure, e.g. an envelope, made of bonded sheets of superplastic metals in a mould and injecting inert gas into the envelope to inflate it so that it adopts the shape of the mould. If titanium is used, the envelope can be made by diffusion bonding but diffusion bonding is far more difficult when applied to aluminium or aluminium alloys because the tenaceous aluminium oxide film formed on the surface of aluminium blocks diffusion bonding.

It has been proposed in EP 0 350 329 to form an envelope that can be superplastically formed by explosive bonding aluminium sheets. Explosive bonding is a known technique of joining metal components together and finds particular application in cladding a metal component, e.g. a sheet, with a more expensive metal to gain the benefits of the properties of the expensive metal, e.g. stainless steel, without having to use the expensive metal throughout the whole component. It is known to perform explosive bonding by placing the components being welded upon a substantial structure (known as an 'anvil') and to place a plate (known as a 'driver plate') on top of the components; an explosive charge is placed on top of the driver plate and the driver plate transmits the force of the explosion to the components, which are welded together by such forces. By using a driver plate, damage to the surface of the topmost component is minimised and the weld quality is improved. EP-0 350 329 describes the use of a stopping-off material in explosive bonding.

One problem with the explosive bonding is that a weld can also form between the anvil and the composite bonded structure and/or between the driver plate and the composite structure and this makes removal of the structure from the anvil/driver plate difficult. To avoid this problem, common salt has been placed between the anvil and the components and between the components and the driver plate. Unfortunately, this leads to degradation of the surface of the components being bonded; furthermore, the force of the explosion causes air burning in the spaces between the components and the anvil/driver plate which further degrades the components. In an effort to overcome this problem it has been proposed to place sheets of rubber between the anvil and the components and between the components and the driver plate but unfortunately this does not completely eliminate the problem of air burning. The present invention provides a process that overcomes this problem and prevents surface degradation of the metal sheets during explosive bonding.

GB-1 456 015 describes a process of forming a lap joint between two aluminium sheets that are painted or covered by a polymeric coating. The paint or coating is removed at the interfaces of the two sheets that are to be joined and the two sheets overlapping at the interface are placed on an anvil; a length of explosive is fixed over the lapped region and detonated to explosion weld the two sheets together. In order to protect the coating on the sheet in contact with the anvil from damage, a strip of resilient polyvinylchloride may be placed over the anvil and may be secured to the anvil by adhesive.

GB-1 369 879 describes a method of cladding a cheap material, e.g. mild steel, with a sheet of expensive material, e.g. stainless steel, by explosion welding using a driver plate and anvil arrangement. A bond-inhibiting protective layer, which is equivalent to the layer of salt known from the above-described prior art, is provided on the sheet of material contacted by the driver plate during explosive bonding in order to prevent bonding between the sheet and the plate and in order to protect the cladding sheet from cracks and/or wrinkles. The bond-inhibiting layer may be rubber, synthetic resin, paint, water, gelatine or an agar gel.

EP-0 324 231 describes a method of explosive bonding which involves placing salt between a stack being bonded and an anvil.

### DISCLOSURE OF THE INVENTION

The present invention enhances the known use of salt in preventing bonding between, on the one hand, the materials being bonded and, on the other hand, the anvil/driver plate and provides excellent protection against surface degradation during explosive bonding prior to superplastic forming when salt (or some other inert granular stop-off material) is used.

According to the present invention, there is provided a superplastic forming process as defined in the accompanying claims.

The resilient material should be capable of being applied to the metal components, e.g. by spraying or dipping, and it should set quickly; also it should be removable from the components after explosive bonding. The preferred material is a natural or synthetic rubber or a plastics material. Rubbers suitable for this process are known, for example TURCO 520.

The coating of resilient material should be sufficiently thick to prevent the components from sticking to the anvil/driver plate and to provide adequate protection for the surface of the components and we have found that 1 mm thick layers of rubber are sufficient, although we contemplate using layers up to 5 mm thick, e.g. up to 3 mm thick.

After explosive bonding and removal of the resilient coating, the composite bonded article can be subject to a heat treatment (as described in EP-0 350 329).

The surface finish of the stack after removal of the resilient material is excellent and this is believed to result from the use of inert granular material in conjunction with the resilient material that is coated onto the stack.

### BRIEF DESCRIPTION OF THE DRAWINGS

The invention will now be described in further detail, by way of example only, with reference to the accompanying drawings, in which:
Fig. 1 is a schematic sectional view of the explosive bonding process being performed, and
Fig. 2 is a sectional view of a panel made by superplastic forming the stack that was explosive bonded according to the process depicted in Fig. 1.

### BEST MODE OF PERFORMING THE INVENTION

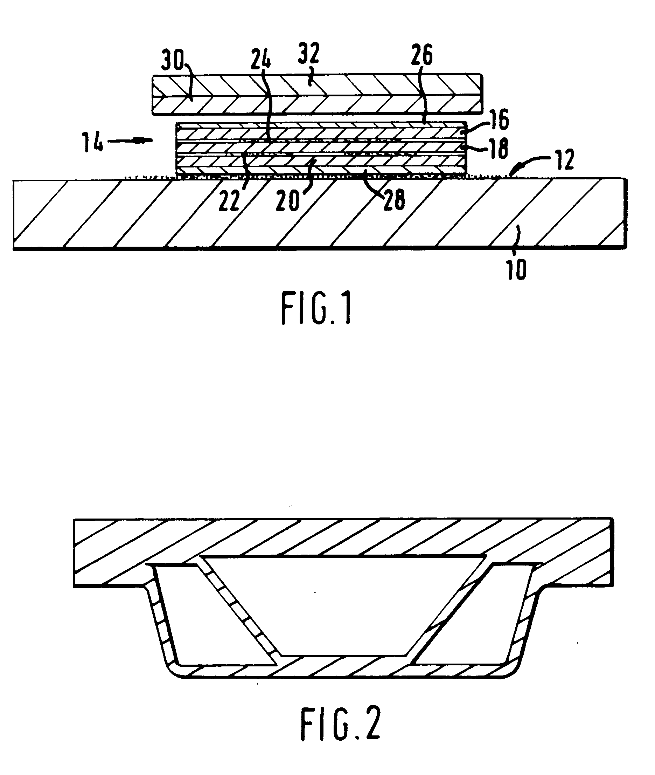

Referring firstly to Fig. 1, there is shown an anvil 10 covered with a bed 12 of salt; a stack 14 of the sheets 16, 18 and 20 made of a superplastically formable aluminium-lithium alloy is supported on the anvil; a porous stop-off material 22, e.g. alumina, silica or boron nitride, has previously been applied to selected limited areas of the top side of sheet 20 and further stop-off material 24 had been applied to selected areas of the top side of sheet 18 to prevent bonding between the sheets 16, 18 and 20 in the selected areas. The stop-off material may be applied by known techniques e.g. silk screen printing. Alternatively, the stop-off material may be a woven glass cloth. The top and bottom surfaces of the stack are each covered with a coating 26, 28 of rubber, e.g. TURCO 520, by spraying or dipping. The rubber is preferably applied to the individual sheets 16, 20 prior to being assembled into the stack 14.

The stack 14 is then placed on the salt bed 12 and a driver plate 30 is spaced above the stack 14 by spacers (not shown). Finally, an explosive charge 32 is placed on the driver plate 30.

When the explosive charge 32 is detonated, the driver plate 30 is propelled downwards and its impact with the stack 14 causes sheets 16, 18 and 20 to be welded together except in areas 22, 24 to which stop-off material had been applied.

The rubber coatings 26, 28 are peeled off the stack and the stack is then heat treated to consolidate the bonds as taught in EP 0 350 329.

The stack is then superplastically formed by known techniques, e.g. the stack has one or more pipes (not shown) connected to supply gas to the stopped-off areas 22, 24 and is placed in a mould and heated; gas is fed into the areas 22, 24 through the pipes and this causes the sheets to be inflated to adopt the shape of the mould. A panel that can be made by superplastically forming stack 14 is shown in Fig. 2.

## Claims

1. A superplastic forming process comprising:
applying a stopping-off material (22,24) to one or more components (16,18,20) made of a material that can be formed superplastically,
assembling the components (16,18,20) into a stack with the stopping-off material between the components,
spreading a bed of inert granular material (14) on an anvil (10),
placing the stack on the bed of granular material (12) with the coating of resilient material (28) contacting the granular material,
placing an explosive charge (32) above the stack,
detonating the explosive charge (32) to join the components (16,18,20) together in those areas to which the stopping-off material (22,24) has not been applied, thus forming a composite structure, and
subjecting the composite structure to superplastic forming to form an expanded finished or semi-finished product,
characterised in that an adherent coating of resilient material (28) is applied on one of the components (20) of the stack prior to detonation of the explosive charge such that the coating of resilient material forms a bottom coating of the said stack, and further characterised in that the resilient material (28) is removed from the composite structure following detonation of the explosive charge and prior to superplastic forming.

2. A process as claimed in claim 1, wherein the coating of resilient material (28) is applied by spraying or dipping.

3. A process as claimed in claim 1 or claim 2, wherein the said resilient material (28) is a natural or synthetic rubber or a plastics material.

4. A process as claimed in any one of claim 1 to 3, wherein a coating of resilient material (28) is applied also to the top of the stack.

5. A process as claimed in any one of claims 1 to 4, wherein a driver plate (30) is interposed between the stack and the explosive charge (32).

6. A process as claimed in claim 5, wherein a layer of granular material is additionally spread over the top of the stack.

7. A process as claimed in any one of claims 1 to 6, wherein the coating of resilient material (26, 28) is up to 5 mm thick.

8. A process as claimed in claim 7, wherein the coating of resilient material (26, 28) is about 1 mm thick.

9. A process as claimed in any one of claims 1 to 8, wherein the inert granular material (12) is salt.

10. A process as claimed in any one of claims 1 to 9, wherein, prior to superplastic forming, the composite structure is subjected to a heat treatment step to consolidate the explosive welds in the composite structure.

## Patentansprüche

1. Verfahren zur superplastischen Verformung mit den folgenden Schritten:
Es wird ein Trennmaterial (22, 24) auf eines oder mehrere Werkstücke (16, 18, 20) aufgebracht, die aus einem Material bestehen, das superplastisch verformbar ist,
es werden die Werkstücke (16, 18, 20) übereinander gestapelt, wobei das Trennmaterial zwischen den Werkstücken verbleibt;
es wird ein Bett aus inertem Granularmaterial (14) auf einem Amboß (10) aufgebracht,
es wird der Stapel auf dem Bett aus Granularmaterial (12) abgelegt, wobei der Überzug aus elastischem Material (28) das Granularmaterial berührt;
es wird eine Explosivladung (32) über dem Stapel angebracht;
man läßt die Explosivladung (32) detonieren, um die Werkstücke (16, 28) in jenen Bereichen miteinander zu verschweißen, in denen kein Trennmaterial (22, 24) aufgebracht wurde, wodurch ein Verbundaufbau geschaffen wird, und
es wird der Verbundaufbau einer superplastischen Verformung unterworfen, um ein expandiertes fertiges oder halbfertiges Produkt zu erzeugen,
dadurch gekennzeichnet, daß ein anhaftender Überzug aus elastischem Material (28) auf einem der Werkstücke (20) des Stapels aufgebracht wird, bevor die Explosivladung detoniert, derart, daß der Überzug aus elastischem Material einen Bodenüberzug des Stapels bildet und weiter dadurch gekennzeichnet, daß das elastische Material (28) von dem Verbundaufbau nach der Detonation der Explosivladung und vor der superplastischen Verformung entfernt wird.

2. Verfahren nach Anspruch 1, bei welchem der Überzug aus elastischem Material (28) durch Aufspritzen oder durch Tauchen aufgebracht wird.

3. Verfahren nach den Ansprüchen 1 oder 2, bei welchem das elastische Material (28) ein natürlicher oder ein synthetischer Gummi oder ein Plastikmaterial ist.

4. Verfahren nach einem der Ansprüche 1 bis 3, bei welchem der Überzug aus elastischem Material (28) auch auf die Oberseite des Stapels aufgebracht wird.

5. Verfahren nach einem der Ansprüche 1 bis 4, bei welchem eine Antriebsplatte (30) zwischen den Stapel und die Explosivladung (32) gefügt wird.

6. Verfahren nach Anspruch 5, bei welchem eine Schicht aus Granularmaterial zusätzlich über die Oberfläche des Stapels ausgebreitet wird.

7. Verfahren nach einem der Ansprüche 1 bis 6, bei welchem der Überzug aus elastischem Material (26, 28) bis zu 5 mm dick ist.

8. Verfahren nach Anspruch 7, bei welchem der Überzug aus elastischem Material (26, 28) etwa 1 mm dick ist.

9. Verfahren nach einem der Ansprüche 1 bis 8, bei welchem das inerte Granularmaterial (12) Salz ist.

10. Verfahren nach einem der Ansprüche 1 bis 9, bei welchem vor der superplastischen Verformung der Verbundaufbau einer Wärmebehandlungsstufe unterworfen wird, um die Explosivverschweißungen in dem Verbundaufbau zu festigen.

## Revendications

1. Procédé de formage superplastique comportant les étapes consistant à:
appliquer un matériau d'arrêt (22, 24) sur un ou plusieurs composants (16, 18, 20) constitués d'un matériau qui peut être formé de manière super plastique,
assembler les composants (16, 18, 20) sous forme d'un empilage ayant du matériau d'arrêt entre les composants,
pulvériser un lit de matériau granulaire inerte (14) sur une enclume (10),
placer l'empilage sur le lit de matériau granulaire (12), un revêtement de matériau élastique (28) étant en contact avec le matériau granulaire,
placer une charge explosive (32) au-dessus de l'empilage,
faire exploser la charge explosive (32) pour relier les composants (16, 18, 20) au niveau des zones sur lesquelles le matériau d'arrêt (22, 24) n'a pas été appliqué, en formant ainsi une structure composite, et
soumettre la structure composite à un formage superplastique pour former un produit expansé fini ou semi fini,
caractérisé en ce qu'un revêtement adhésif de matériau élastique (28) est appliqué sur un des composants (20) de l'empilage avant de faire exploser la charge explosive de telle sorte que le revêtement de matériau élastique forme un revêtement constituant une partie inférieure dudit empilage, et caractérisé en outre en ce que le matériau élastique (28) est enlevé de la structure composite après explosion de la charge explosive et avant le formage superplastique.

2. Procédé selon la revendication 1, dans lequel le revêtement de matière élastique (28) est appliqué par pulvérisation ou trempage.

3. Procédé selon la revendication 1 ou 2, dans lequel ledit matériau élastique (28) est du caoutchouc naturel ou synthétique ou une matière plastique.

4. Procédé selon l'une quelconque des revendications 1 a 3, dans lequel un revêtement de matériau élastique (28) est aussi appliqué sur la partie supérieure de l'empilage.

5. Procédé selon l'une quelconque des revendications 1 a 4, dans lequel une plaque d'entraînement (30) est interposée entre l'empilage et la charge explosive (32).

6. Procédé selon la revendication 5 dans lequel une couche de matériau granulaire est en outre pulvérisée sur la partie supérieure de l'empilage.

7. Procédé selon l'une quelconque des revendications 1 a 6, dans lequel le revêtement de matériau élastique (26, 28) a une épaisseur allant jusqu'a 5 mm.

8. Procédé selon la revendication 7, dans lequel le revêtement de matériau élastique (26, 28) a une épaisseur d'environ 1 mm.

9. Procédé selon l'une quelconque des revendications 1 a 8, dans lequel le matériau granulaire inerte (12) est du sel.

10. Procédé selon l'une quelconque des revendications 1 à 9, dans lequel, avant le formage superplastique, la structure composite est soumise a une étape de traitement thermique pour consolider les soudures par explosion situées dans la structure composite.
